(19) Europäisches Patentamt

European Patent Office

Office européen des brevets

(11) **EP 1 217 365 A2**

(12) **EUROPÄISCHE PATENTANMELDUNG**

(43) Veröffentlichungstag:
26.06.2002 Patentblatt 2002/26

(51) Int Cl.⁷: **G01N 27/416**

(21) Anmeldenummer: 01000743.3

(22) Anmeldetag: 12.12.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.12.2000 DE 10064668**

(71) Anmelder: **SIEMENS AKTIENGESELLSCHAFT**
**80333 München (DE)**

(72) Erfinder:
• **Bausewein, Andreas**
**85416 Langenbach (DE)**
• **Fleischer, Maximilian, Dr.**
**85635 Höhenkirchen (DE)**
• **Meixner, Hans, Prof. Dr.**
**85540 Haar (DE)**
• **Mayer, Ralf**
**72074 Tübingen (DE)**
• **Reinhardt, Götz, Dr.**
**71032 Böblingen (DE)**

(54) **Mehrelektroden-Gassensorsystem mit Gasreferenz**

(57) Ein Mehrelektroden-Gassensorsystem mit Gasreferenz, bei dem sämtliche aktiven Komponenten mittels Dickschichttechnik auf einem gemeinsamen ionenleitenden Substrat aufgebracht werden können, ist ein kostengünstiges System zur Messung von Schadstoffkomponenten in Abgasen.

## FIG 4

Mehrelektrodensensor -Sensor

Referenz-elektrode
Meßgas-elektrode
Luft

AE2
AE1 RE GE
Nernstspannung
Bipotentiostat

**Beschreibung**

Die Erfindung betrifft Gassensoren zur selektiven Detektion von Einzelgasen in Gasgemischen. Auf diesem Gebiet haben sich amperometrische Sensoren mit der Technologie von diffusionsbegrenzten Pumpsensoren bewährt.

Die Messung von Schadstoffkonzentration in Abgasen und speziell Verbrennungsabgasen mit geeigneten Sensoren ist wichtig für die Reduzierung von Schadstoffemissionen. Ein Beispiel ist eine kontinuierliche Überwachung der Funktionsweise des Katalysators in Kraftfahrzeugen über die Messung der Emissionen einer Schadstoffkomponente. Bisher gibt es für diese Aufgabe keine kommerziellen Produkte, bzw. für NO nur ein sehr teures Produkt. Mit der vorliegenden Erfindung soll ein kostengünstiges Produkt zur Messung von Schadstoffkomponenten in Abgasen ermöglicht werden.

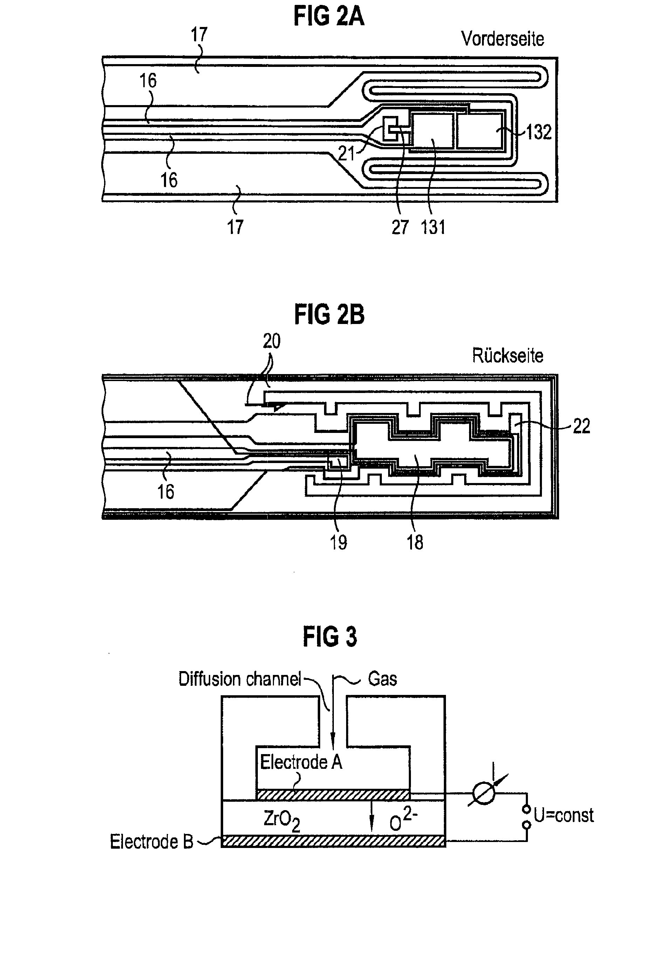

Insbesondere zur selektiven Detektion von Einzelgasen in Verbrennungsabgasen hat sich die Technologie von Diffusionsbegrenzten Pumpsensoren (auch als amperometrische Sensoren bezeichnet) sehr bewährt. Der aus dem Stand der Technik bekannte Grundaufbau ist in Figur 3 angegeben. Darin wird ein Prinzipaufbau eines diffusionsbegrenzten Pumpsensors skizziert.

Der Aufbau ist auf ca. 600°C geheizt, wodurch der Ionenleiter, das $ZrO_2$ , eine starke Sauerstoffionen-Leitfähigkeit annimmt. Durch die definierte Diffusionsöffnung tritt das Zielgas (hier. z.B. $O_2$) in die Kavität bzw. den Kanal ein. Der $O_2$ wird an der oben liegenden Elektrode A des $ZrO_2$ aufgespalten und zu $O^{2-}$ reduziert und durchläuft aufgrund der anliegenden Spannung als Ionenstrom das $ZrO_2$. An der Gegenelektrode des $ZrO_2$ wird das Ion wieder zum ungeladenen Sauerstoff oxidiert. Bei diesem "Herauspumpen" des $O_2$ aus der Kammer wird im äußeren Stromkreis ein der transportierten Sauerstoffmenge proportionaler Strom gemessen (jedes $O_2$-Molekül bewirkt die Ladung $4e^-$) welcher als Sensorsignal dient.

Prinzipiell können mit derartigen Aufbauten auch andere Gase umgeladen werden, so ist z.B. über eine entsprechend eingestellte Spannung an geeigneten Elektroden auch die Detektion von NO über dessen Reduktion zu $N_2$ möglich. Allerdings würden sich im Falle einer Zelle gemäß Fig. 3 dann das Sauerstoff und das NO-Signal überlagern.

Eine elektrochemische Pumpzelle zum Nachweis von zwei unterschiedlichen Abgaskomponenten mit zwei aufeinanderfolgenden Kammern, die über die gleiche Diffusionsbarriere mit dem Abgas in Verbindung stehen, wurde bereits frühzeitig in US4285790 und EP0060944A1 beschrieben. Bei der dort beschriebenen Sonde wird in der ersten Kammer Sauerstoff vollständig mit dem im Abgas im Überschuss vorhandenen $CO_2$ zu den im Ionenleiter beweglichen Carbonationen umgesetzt. Das sauerstofffreie Restgas gelangt dann in die zweite Kammer, in der dann die brennbaren Abgasbestandteile elektrochemisch umgesetzt werden. Dadurch ist es möglich einerseits die Menge an freiem Sauerstoff und die Menge an Brenngas zu bestimmen. Die Abscheidungsreihenfolge ist sehr wesentlich, um katalytische Reaktionen zwischen Sauerstoff und den brennbaren Komponenten zu vermeiden. Zum Einsatz kommen entweder zwei unterschiedliche Ionenleiter (geschmolzenes Carbonat für Sauerstoff und stabilisiertes Zirkondioxid für die brennbaren Komponenten) oder ein Ionenleiter zum Nachweis der beiden Komponenten. Weitere Sonden mit mehreren Elektroden unter Verwendung des gleichen Ionenleiters für alle relevanten Gaskomponenten werden im Stand der Technik bereits beschrieben.

In US 5397442 werden Zellen mit 2 Elektroden beschrieben bei denen Sauerstoff und eine zweite sauerstoffhaltige Gaskomponente wie z.B. NO über selektive Elektroden getrennt voneinander nachgewiesen werden. Dabei gelangen die Gase entweder parallel über Diffusion in einen Hohlraum auf beide Elektroden oder werden über eine Einlassöffnung sequentiell über die beiden Elektroden zur Auslassöffnung geleitet. Für die erste Elektrode werden dabei Perowskite eingesetzt, die Sauerstoff hochselektiv reduzieren. Die sauerstoffhaltige Komponente wird an der zweiten Elektrode selektiv reduziert. Der Anteil des Sauerstoffs, der an der zweiten Elektrode reduziert wird, kann über eine Auswertung und rechnerische Korrektur der Signale beider Elektroden berücksichtigt werden.

US 5049254 und US 5288375 beschreiben Zellen mit 2 Elektroden, die in aufeinanderfolgenden Hohlräumen untergebracht sind. An der ersten Elektrode wird zunächst der Sauerstoff abgeschieden, so dass an der zweiten Elektrode im zweiten Hohlraum ein sauerstofffreies Restgas ankommt. Im zweiten Hohlraum können dann die weiteren sauerstoffhaltigen Komponenten reduziert werden. Der Vorteil dieser Anordnung liegt darin, dass der Einfluss von Sauerstoff auf das Signal eliminiert wird, also die sauerstoffhaltigen Komponenten wirklich selektiv gemessen werden. Weiterhin wird auch die Möglichkeit beschrieben, diese Zellen für die Abscheidung einzelner sauerstoffhaltiger Komponenten an der ersten Elektrode einzusetzen, so dass die selektive Messung einer einzelnen Komponente an der zweiten Elektrode möglich wird.

DE-A1-4439901 beschreibt eine Zweielektrodenzelle mit zwei hintereinandergeschalteten Elektroden zur gleichzeitigen Messung von Sauerstoff und $NO_x$. Um eine Reduktion des $NO_x$ bereits an der ersten Elektrode zu vermeiden, wird diese mit einem gemischt Elektronen/Sauerstoffionen leitendem Material abgedeckt durch das nur Sauerstoff zur Elektrode diffundieren kann. Dadurch soll eine Abreaktion des $NO_x$ bereits an der ersten Elektrode vermieden werden.

In GB2288873A werden zwei und Mehrelektrodenanordnungen in aufeinanderfolgenden Hohlräumen beschrieben. Zusätzlich wird für jeden Hohlraum auch noch ein potentiometrischer Messfühler vorgesehen, der den Gleichgewichts-Sauerstoffpartialdruck in der Messkammer simultan bestimmt.

In EP 0678740 A1 werden Zweielektrodenzellen in Mehrschichtkeramiktechnologie inklusive des Prinzips zur Ansteuerung der Sensoren beschrieben. Bei diesen Sensoren wird zusätzlich ein Luftkanal beschrieben, der einerseits als Referenzpotentialpunkt für die Regelung der angelegten Pumpspannungen verwendet wird und andererseits auch als stromführende Gegenelektrode für die zweite Elektrode Verwendung findet. Die hier beschriebenen Mehrschichtkeramiksonden haben den Nachteil, dass sie einerseits vom Herstellungsprozess her sehr aufwendig sind und andererseits alle Komponenten im gleichen Schritt eingebrannt werden müssen. Insbesondere für die Elektroden ist dies sehr kritisch, da die Eigenschaften nicht optimal angepasst werden können.

Die WO 96/17242 beschreibt Zwei- und Mehrelektrodenzellen. Für manche Anwendungen ist hier die Verwendung eines separaten getrennten Gasraums für die Referenzierung der angelegten Potentiale vorgesehen. Dieser ist über einem festen Keramikverbund ausgeführt.

Die in WO 96/17242 beschriebenen Dickschichtsensoren haben den Nachteil, dass für die Referenzierung der angelegten Potentiale ein separater Gaskanal über einen festen Keramikverbund ausgeführt ist, also Teile der Anordnung in Mehrschichtkeramiktechnologie ausgeführt sein müssen.

Eine separate Gasreferenz ist immer dann von Vorteil, wenn in dem Messgas Schwankungen über mehrere Dekaden, beispielsweise im Sauerstoffpartialdruck, auftreten. Bei Verbrennungsabgasen ist dies der Fall, wenn bei dem Verbrennungsprozess Betriebszustände mit fetten und mit mageren Gemischen auftreten können. Ohne Referenz werden im fetten Gemisch bereits alle reduzierbaren Komponenten reduziert, d.h. der Sensor ist nicht mehr einsatzfähig.

Der Erfindung liegt die Aufgabe zugrunde ein Mehrelektroden-Gassensorsystem mit einem einfachen Keramikaufbau und optimaler Elektrodenpräparierung kostengünstig herzustellen.

Die Lösung dieser Aufgabe geschieht durch die Merkmalskombination des Anspruches 1 bzw. 2.

Die vorliegende Erfindung löst die Aufgabe durch die Bereitstellung eines Mehrelektrodensensor mit Gasreferenz, bei dem alle aktiven Komponenten über Dickschichttechnik auf ein sauerstoffionenleitendes Substrat aufgebracht werden. Dadurch bleiben die spezifischen Vorteile der Dickschichttechnik hinsichtlich der Möglichkeiten zur Optimierung einzelner Komponenten und speziell der Elektroden erhalten.
Die Gasreferenz kann sowohl auf dem gleichen Bauteil, als auch extern bereitgestellt werden.

Wesentlich mehr Möglichkeiten hinsichtlich der Optimierung von Elektrodeneigenschaften bieten Sensoren in Dickschichttechnik. Als weiterer Vorteil ist der kostengünstige Herstellungsprozess zu nennen.

Weitere vorteilhafte Ausgestaltungen können den Unteransprüchen entnommen werden.

Im Folgenden werden anhand der schematischen Figuren Ausführungsbeispiele beschrieben:

Die Figuren 1A und 1B zeigen jeweils die Ober- und die Unterseite der Sensorstruktur als Explosionszeichnung,

Die Figuren 2A und 2B zeigen in der jeweiligen Draufsicht die Ober- und die Unterseite der Sensorstruktur mit sämtlichen Formen der übereinanderliegenden Komponenten,

Figur 3 zeigt den Stand der Technik,

Figur 4 zeigt ein Schema eines Mehrelektrodensensors mit Referenzierung über eine separate λ-Sonde,

Figur 5 zeigt die Bereitstellung von für die Referenzelektrode benötigtem Sauerstoff über eine elektrochemische Zersetzung von Wasser im Bereich des Ionenleiters.

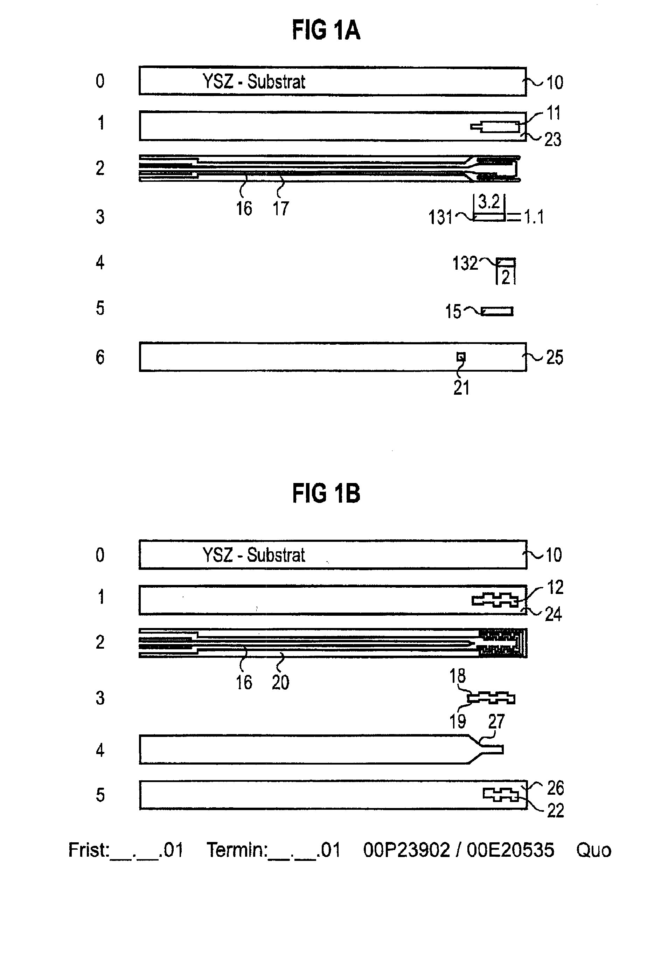

Die Erläuterungen erfolgen in Bezug auf die Figuren 1A und 1B, die ein Ausführungsbeispiel eines erfindungsgemäßen Sensors darstellen. Es sind sequentiell die Lage der einzelnen funktionalen Schichten dargestellt. Die Figuren 1A,1B sind Explosionsdarstellungen, wobei die Komponenten in den entsprechenden Reihenfolgen 0-6 auf der Oberseite und 0-5 auf der Unterseite des Sensors aufeinandergebracht werden.
Auf der Oberseite/Vorderseite des Sensors, Figuren 1A und 2A, sind eine einfache Zweielektrodenanordnung mit Arbeitselektroden 13, Diffusionsschicht 15 und Glasabdeckung 25 sowie ein Thermoelement 17 zur Heizungsregelung angebracht.

Die Unterseite/Rückseite enthält die Heizerstruktur 20, Gegenelektrode 18 und Referenzelektrode 19, sowie eine Diffusionsschicht 27 und Glasabdeckschicht 26 mit Gaseinlass 21 (Aussparung, Durchgang). Der Gaseinlass ist jeweils mit 11,12 oder 21,22 bezeichnet und die Isolierschichten mit 23, 27.

Ein Luftkanal der zugleich zur Abfuhr des durch den Ionenleiter gepumpten Sauerstoffs wie in EP 0678740 A1 oder WO 96/17242 beschrieben genutzt wird, ist in Dickschichttechnik ungünstig zu realisieren. Die Referenzelektrode 19 wird in dieser Anordnung nur als Potentialbezugspunkt verwendet, der gepumpte Sauerstoff wird an der Gegenelektrode 18 wieder ins Messgas abgegeben. Die Gegenelektrode 18 kann auch geteilt und jeweils für eine der Arbeitselektroden zuständig sein.

Die Funktion von Referenzelektrode 19 und Diffusionsschicht 27 lässt sich diskontinuierlich überprüfen. Bei Anlegen eines Potentials zwischen Referenz- und Gegenelektrode stellt sich ein dem Sauerstoffpartialdruck im Referenzgas proportionaler Grenzstrom ein. Bei Fehlfunktionen z.B. durch Leckage treten große Abweichungen auf.

Die Figuren 2A und 2B zeigen auf der Vorderseite die 1. Pumpelektrode/Arbeitselektrode 13, die Sauerstoffelektrode 131, und die 2. Pumpelektrode/Arbeitselektrode 13, die NO-Elektrode 132, sowie den Gaseinlass 21, den Diffusionskanal 27 zur Diffusionsbegrenzung und Kontakte 16 und Widerstandsthermometer 17.

Dickschichtsensor mit potentiometrischem λ-Sensor als (Gas)referenz:

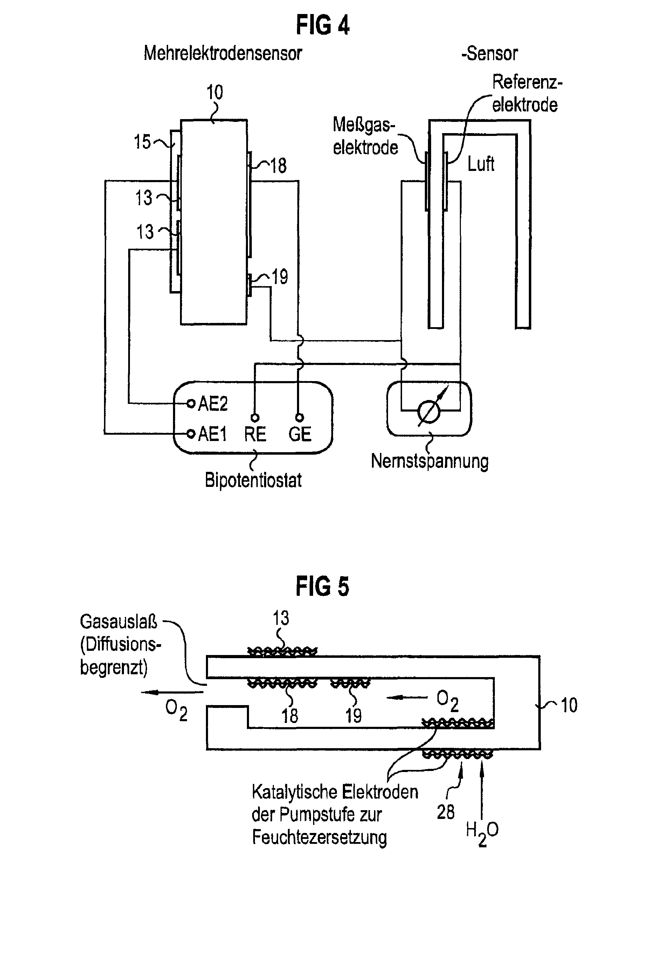

Alternativ kann auch ein Mehrelektrodensensor mit einem separaten konventionellen λ-Sensor so gekoppelt werden, dass die Luftreferenz des λ-Sensors von dem Mehrelektrodensensor mitgenutzt wird. Dies ist z.B. dann sinnvoll, wenn zusätzlich ein normaler λ-Sensor auch mit eingesetzt werden soll oder eine eigene Referenz nicht ausreicht. Die Verschaltung ist in Figur 4 dargestellt. Auf eine Diffusionsschicht und Glasabdeckung kann hier auf der Unterseite verzichtet werden. Die Referenzelektrode 19 des Mehrelektrodensensors wird mit der Messgaselektrode des λ-Sensors verbunden. Die Luftelektrode des λ-Sensors wiederum dient als Potentialbezugspunkt für die beiden Arbeitselektroden.

Optimierte Festelektrolytschicht zur Erhöhung von Umsatz und Selektivität der Elektrodenreaktionen:

Das in den beschriebenen Anwendungen eingesetzte Festelektrolytsubstrat muss viele Anforderungen erfüllen. Es muss gasdicht sein, thermisch und mechanisch stabil sein, und den eingesetzten Pasten zur Herstellung der Dickschicht eine gute Grundlage zur Haftung bieten. Diese Eigenschaften werden in der Regel durch geeignete Sinterzusätze optimiert. Als ungünstig bzw. in der Handhabung schwieriges Problem hat sich herausgestellt, dass diese Zusätze auch die elektrochemische Aktivität der Elektroden in z.T. erheblichen Maße beeinflussen. Eine Optimierung aller dieser Einflüsse ist nur unter großen Kompromissen möglich. Eine Entkopplung der Optimierung der mechanisch/thermischen Eigenschaften von den elektrochemischen Eigenschaften ist über eine zusätzliche dünne elektrochemisch aktive Festelektrolytschicht möglich, die auf das mechanisch/thermisch optimierte Substrat 10 gedruckt wird. Auf dieser Schicht können dann die Elektroden abgeschieden werden.

Der Kern der Erfindung bzw. die Lösung des Problems liegt in der Potentialreferenzierung bei einem Dickschichtmehrelektrodensensor, wobei die wesentlichen Vorteile der Dickschicht genutzt werden.

Vorteilhafterweise kann eine Optimierung der Elektrodeneigenschaften über eine zusätzliche elektrochemisch optimierte Festelektrolytschicht erzielt werden.

Figur 5 zeigt die Bereitstellung des benötigten Sauerstoffs für die Referenzelektrode über eine elektrochemische Zersetzung des Wassers:

Unabhängig von der Stöchiometrie der Verbrennung sind im Abgas immer sehr hohe Anteile an Kohlendioxid und Wasser (jeweils mindestens in der Größenordnung von 10%) vorhanden. Beide könne mit vergleichbaren Spannungen an katalytisch aktiven Elektroden elektrochemisch gespalten werden. Die Reaktionsrate des Wasser ist jedoch im Allgemeinen höher als die des Kohlendioxids, so dass sich ersteres besser als Ausgangsstoff eignet. Die Substanzen lassen sich über eine einfache Pumpzelle zersetzen, wenn die elektrochemische Reaktion durch eine ausreichend große Spannung getrieben wird, wobei an der äußeren Elektrode die Reaktion

$$H_2O + 2\,e^- \rightarrow O^{2-} + H_2 \text{ bzw.}$$

$$CO_2 + 2\,e^- \rightarrow O^{2-} + CO \text{ bzw.}$$

abläuft. Das Sauerstoffion durchläuft dann den Ionenleiter 10 und wird an der anderen innenliegenden Elektrode gemäß

$$2\,O^{2-} - 4\,e^- \rightarrow O_2$$

zu Sauerstoff reduziert. Mit dem so generierten Sauerstoff kann dann der Gasversorgungs- bzw. Referenzkanal befüllt werden. Figur 5 zeigt also das Prinzip des Befüllens eines Gaskanals mit Sauerstoff, welcher aus Feuchte generiert wird. Dies geschieht in einer zusätzlichen Pumpstufe 28.

Für die Funktion ist wichtig, dass der Sauerstoff im Überschuss produziert wird, einen gewissen Teil des Gaskanals durchläuft, in welchem sich andere Funktionselemente des Sensors befinden und anschließend zur Vermeidung des Aufbaus eines Überdrucks durch eine Öffnung entweichen kann.

Die besonderen zu erzielenden Vorteile sind:

Ausreichende Sauerstoffversorgung der ist gesichert. Darstellbar ist ein robuster Aufbau, der sich mit der ohnehin für derartige Sensoren benötigten Herstellungstechnologie realisieren lässt.
Einfacheres Housing/Einkapseln als im Stand der Technik, da kein Anschluss an Umgebungsluft mehr benötigt ist.

**Patentansprüche**

1. Mehrelektroden-Gassensorsystem mit Gasreferenz, bestehend aus einem ionenleitenden gemeinsamen Substrat (10), auf dem einseitig mindestens zwei Arbeitselektroden (13,14) und gegenüberliegend eine Gegenelektrode (18) und eine Referenzelektrode (19), sowie jeweils eine Diffusionsschicht aufgebracht sind, wobei sämtliche direkt auf dem Substrat (10) aufgebrachten Komponenten mittels Dickschichttechnik dargestellt sind und die Referenzelektrode mit einem separaten Referenzgas in Kontakt steht.

2. Mehrelektroden-Gassensorsystem mit Gasreferenz, bestehend aus einem ionenleitenden gemeinsamen Substrat (10), auf dem einseitig mindestens zwei Arbeitselektroden (13,14) und gegenüberliegend eine Gegenelektrode (18) und eine Referenzelektrode (19), sowie jeweils eine Diffusionsschicht aufgebracht sind, wobei sämtliche direkt auf dem Substrat (10) aufgebrachte Komponenten mittels Dickschichttechnik dargestellt sind und die dem Messgas ausgesetzte Referenzelektrode mit einer separaten $\lambda$-Sonde zur Bereitstellung einer Luftreferenz gekoppelt ist.

3. Mehrelektroden-Gassensorsystem nach Anspruch 1 oder 2, bei dem für jede Arbeitselektrode (13) eine separate Gegenelektrode (18) aufgebracht ist.

4. Mehrelektroden-Gassensorsystem nach einem der Ansprüche 1-3, bei dem das Substrat (10) aus Yttrium stabilisiertem Zirkonoxid besteht.

5. Mehrelektroden-Gassensorsystem nach einem der vorhergehenden Ansprüche, bei dem zur Eliminierung von elektrochemischen Aktivitäten der Elektroden eine zusätzliche elektrochemisch aktive Festelektrolytschicht auf dem Substrat aufgebracht ist, worauf die Elektroden platziert sind.

6. Mehrelektroden-Gassensorsystem nach einem der Ansprüche 1,3,4 oder 5, bei dem die Referenzelektrode (19) mit Luft in Kontakt steht.

7. Mehrelektroden-Gassensorsystem nach einem der Ansprüche 1,3,4,5 oder 6, bei dem die Referenzelektrode (19) mit reinem Sauerstoff in Kontakt steht, zu dessen elektrochemischer Erzeugung eine zusätzliche Pumpstufe (28) am Ionenleiter (10) vorhanden ist.

8. Mehrelektroden-Gassensorsystem nach Anspruch 7, bei dem die zusätzliche Pumpstufe (28) zur Zersetzung von Abgaskomponenten dient.

9. Mehrelektroden-Gassensorsystem nach Anspruch 8, bei dem die Abgaskomponente Wasser ist.

EP 1 217 365 A2

## FIG 1A

## FIG 1B

Frist:___.___.01    Termin:___.___.01    00P23902 / 00E20535    Quo

## FIG 2A

Vorderseite

17
16
16
17
21
27  131
132

## FIG 2B

20

Rückseite

16
19  18
22

## FIG 3

Diffusion channel — Gas

Electrode A

$ZrO_2$    $O^{2-}$

Electrode B

U=const

# FIG 4

Mehrelektrodensensor                                    -Sensor

Referenzelektrode

Meßgaselektrode

Luft

10

15

18

13

13

19

AE2

AE1   RE   GE

Bipotentiostat

Nernstspannung

# FIG 5

13

Gasauslaß
(Diffusionsbegrenzt)

$O_2$

18      19

$O_2$

10

28

$H_2O$

Katalytische Elektroden
der Pumpstufe zur
Feuchtezersetzung